(19) Europäisches Patentamt
European Patent Office
Office européen des brevets

(11) EP 4 685 164 A1

(12) EUROPEAN PATENT APPLICATION

(43) Date of publication:
**28.01.2026 Bulletin 2026/05**

(21) Application number: **24190575.1**

(22) Date of filing: **24.07.2024**

(51) International Patent Classification (IPC):
***C08F 110/06*** *(2006.01)* ***C08F 4/651*** *(2006.01)*
***C08F 4/64*** *(2006.01)* ***C08L 23/12*** *(2006.01)*

(52) Cooperative Patent Classification (CPC):
(C-Sets available)
**C08F 110/06** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Basell Poliolefine Italia S.r.l.**
**20121 Milano (IT)**

(72) Inventors:
- **CAVALIERI, Claudio**
  **44122 Ferrara (IT)**
- **BOCCHINO, Marco**
  **44122 Ferrara (IT)**
- **PELLEGATTI, Giampaolo**
  **44122 Ferrara (IT)**
- **DE CAPUA, Alberta**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

# (54) PROPYLENE HOMOPOLYMER COMPOSITION

(57) A polypropylene composition comprising:
A) from 50 wt% to 90 wt% of a propylene homopolymer optionally containing up to 1.0 wt% of ethylene derived units having the intrinsic viscosity (IV) measured in tetrahydronaphthalene at 135 °C ranges from 5.0 to 12.0 dl/g;
B) from 10 wt% to 50 wt% of a propylene homopolymer obtained by using metallocene catalyst optionally containing up to 1.0 wt% of ethylene derived units

(52) Cooperative Patent Classification (CPC): (Cont.)

C-Sets
**C08F 110/06, C08F 2/001;**
**C08F 110/06, C08F 4/6465;**
**C08F 110/06, C08F 4/6494;**
**C08F 110/06, C08F 4/651;**
**C08F 110/06, C08F 4/6545;**
**C08L 23/12, C08L 23/12;**
C08F 110/06, C08F 2500/04, C08F 2500/11,
C08F 2500/12, C08F 2500/15, C08F 2500/17,
C08F 2500/26, C08F 2500/31, C08F 2500/34,
C08F 2500/35;
C08F 110/06, C08F 2500/17

## Description

FIELD OF THE INVENTION

The present disclosure relates to polypropylene composition comprising a propylene homopolymer obtained by using a metallocene catalyst and a propylene homopolymer having high molecular weight and high melt strength. The composition can be used for obtaining film having reduced gel number.

BACKGROUND OF THE INVENTION

Propylene homopolymer is widely used in the processing fields of injection, extrusion, tape casting and biaxial stretching due to the tailoring structure thereof. However, the common polypropylene molecular chain is of linear structure, which is unlike amorphous polymers, such as polystyrene PS with a region having property similar to the rubber elasticity in a wide temperature range. Thus, polypropylene cannot be thermoformed in a wide temperature range. Meanwhile, the softening point of polypropylene is close to its melt point. When the temperature is higher than the melt point, the melt strength and melt viscosity of polypropylene will decrease rapidly, thus causing the following problems including uneven wall thickness of the products during thermoforming, edges curling and shrinkage that would easily appear during extrusion, coating and rolling, and foam collapse during extrusion foaming etc. Therefore, the use of polypropylene in the fields of thermoforming, foaming and blow molding is limited. As a result, development of polypropylene with high melt strength is always an interest issue. Therefore there is the need to develop a propylene homopolymer to be used in blend for increasing the melt strength of more conventional propylene polymer.

SUMMARY OF THE INVENTION

The present disclosure is directed to a polypropylene composition comprising:

A) from 50 wt% to 90 wt% of a propylene homopolymer optionally containing up to 1.0 wt% of ethylene derived units characterized in that:

- two melting points are present in the DSC thermogram, measured according to ISO 11357-3, 20°C/min;
- the higher melting point, Tm1, measured according to ISO 11357-3, 20°C/min, ranges from 155°C to 170°C;

- the fraction soluble in xylene at 25°C is comprised between 2.0 wt% and 6.0wt%;
- the isotactic pentads mmmm % measured with $C^{13}$NMR ranges from 96.5 mol% to 89.0 mol%;
- the intrinsic viscosity (IV) measured in tetrahydronaphthalene at 135 °C ranges from 5.0 to 12.0 dl/g;
- the melt strength measured at 250°C and applying an acceleration equal to 6 $mm/s^2$ is higher than 0.070 N;

B) from 10 wt% to 50 wt% of a propylene homopolymer obtained by using metallocene catalyst optionally containing up to 1.0 wt% of ethylene derived units characterized in that:

- molecular weight distribution, measured by GPC, Mw/Mn lower than 5;
- MFR, measured according to ISO 1133 at 230°C with a load of 2.16 kg, ranging from 1000 g/10 min to 2500 g/10 min;

    melting point, measured by DSC according to ISO 11357-3, 20°C/min ranging from 153°C to 165°C;
    wherein the resulting composition is characterized in that:
    two melting points in the DSC thermogram, measured according to ISO 11357-3, 20°C/min are present;
    the higher melting point, Tm1, measured according to ISO 11357-3, 20°C/min, ranges from 155°C to 170°C;
    the lower melting point, Tm2 ranges from 140°C to 154°C;
    MFR, measured according to ISO 1133 at 230°C with a load of 5 kg, ranging from 0.2 g/10 min to 3.0 g/10 min;

- the intrinsic viscosity (IV) measured in tetrahydronaphthalene at 135 °C ranges from 3.0 to 5.5 dl/g.

DETAILED DESCRIPTION OF THE INVENTION

The present disclosure is directed to a polypropylene composition comprising:

A) from 50 wt% to 90 wt% preferably from 60 wt% to 85 wt%; more preferably from 65 wt% to 83 wt% of a propylene

homopolymer optionally containing up to 1.0 wt% of ethylene derived units characterized in that:

- two melting points are present in the DSC thermogram measured according to ISO 11357-3, 20°C/min; preferably the lower melting point, Tm2, ranges from 135°C to 150°C;
- the higher melting point, Tm1, measured according to ISO 11357-3. 20°C/min, ranges from 155°C to 170°C; preferably from 157°C to 168°C;

- the fraction soluble in xylene at 25°C is comprised between 6.0 wt% and 2.0wt%; preferably comprised between 5.0 wt% and 2.5wt%; more preferably comprised between 4.0 wt% and 2.8wt%;
- the isotactic pentads mmmm % measured with $C^{13}$NMR ranges from 96.5 mol% to 90.0 mol%, preferably from 96.0 mol% to 90.5 mol%; more preferably from 95.5 mol% to 91.0 mol%
- the intrinsic viscosity (IV) measured in tetrahydronaphthalene at 135 °C ranging from 5.0 dl/g to 12.0 dl/g; preferably from5.5 dl/g to 11.0 dl/g; more preferably from 6.0 dl/g to 10.0 dl/g;
- the melt strength measured 250°C and applying an acceleration equal to 6 $mm/s^2$ is higher than 0.070 N; preferably higher than 0.080 N; more preferably higher than 0.090 N;

B) from 10 wt% to 50 wt% preferably from 15 wt% to 40 wt%; more preferably from 18 wt% to 35 wt% of a propylene homopolymer obtained by using metallocene catalyst optionally containing up to 1.0 wt% of ethylene derived units characterized in that:

- molecular weight distribution, measured by GPC, Mw/Mn lower than 5; preferably lower than 4.5; more preferably lower than 3.6;
- MFR, measured according to ISO 1133 at 230°C with a load of 2.16 kg, ranges from 1000 g/10 min to 2500 g/10 min; preferably ranges from 1300 g/10 min to 2200 g/10 min; more preferably rangse from 1500 g/10 min to 2000 g/10 min;

melting point, measured by DSC according to ISO 11357-3, 20°C/min ranges from 153°C to 165°C; preferably ranges from 155°C to 163°C;
the sum of the amounts of A) + B) being 100wt%;
wherein the resulting composition is characterized in that:
two melting points in the DSC thermogram, measured according to ISO 11357-3, 20°C/min are present;
the higher melting point, Tm1, measured according to ISO 11357-3, 20°C/min, ranges from 155°C to 170°C; preferably ranges from 158°C to 168°C, more preferably ranges from 159°C to 165°C;
the lower melting point, Tm2, measured according to ISO 11357-3, 20°C/min, ranges from 140°C to 154°C; preferably ranges from 142°C to 152°C; more preferably ranges from 143°C to 150°C;
MFR, measured according to ISO 1133 at 230°C with a load of 5 kg, ranges from 0.2 g/10 min to 3.0 g/10 min; preferably ranges from 0.3 g/10 min to 2.0 g/10 min; more preferably ranges from 0.4 g/10 min to 1.0 g/10 min;

- the intrinsic viscosity (IV) measured in tetrahydronaphthalene at 135 °C ranges from 3.0 to 5.5 dl/g; preferably ranges from 3.5 to 5.3 dl/g; more preferably ranges from 3.8 to 5.1 dl/g.

Preferably the homopolymer of component A) shows a value of melt strength lower than 0.30 N.

Preferably the homopolymer of component A) shows a polydispersity index, PI, comprised between 4.5 and 7.5; more preferably between 5.0 and 7.2; more preferably from 5.5 to 6.5.

Preferably in the polypropylene composition of the present disclosure two peaks are present in the GPC analysis, measured as described in the examples section; the first having a log Mw ranging from 4.10 to 5.00; the second peak having the log Mw ranging from 5.50 to 6.3.

Preferably the propylene composition has the distribution of molecular weight Mw/Mn ranging from 20.0 to 50.0; preferably from 25.0 to 42.0; more preferably from 26.0 to 38.0.

Preferably the propylene composition has the distribution of molecular weight Mz/Mw ranging from 2.8 to 6.0; preferably from 3.0 to 5.5; more preferably from 3.2 to 5.0.

The propylene homopolymer component A) preferably comprises:

i) from 30 wt% to 70 wt% ; preferably from 40 wt% to 60 wt%; more preferably from 45 wt% to 55 wt% of a first propylene homopolymer optionally containing up to 1.0 wt% of ethylene derived units having:

- the intrinsic viscosity (IV) measured in tetrahydronaphthalene at 135 °C ranging from 8.0dl/g to 13.0 dl/g; preferably from 8.5 dl/g to 12.0 dl/g; more preferably from 8.8 dl/g to 11.5 dl/g;

ii) From 30 wt% to 70 wt% preferably from 40 wt% to 60 wt%; more preferably from 45 wt% to 55 wt% of a second propylene homopolymer optionally containing up to 1.0 wt% of ethylene derived units having:

- the intrinsic viscosity (IV) measured in tetrahydronaphthalene at 135 °C ranging from 2.0 to 5.5 dl/g; preferably from 2.2 to 5.0 dl/g; more preferably from 2.5 to 4.7 dl/g;

the sum of the amounts of i) + ii) being 100 wt%.

The polypropylene composition of the present invention can be used for obtaining film such as cast, blow and BOPP films in particular cast film having a reduced content of gel numbers.

Furthermore the resulting composition shows an enhanced processability even having an high value of intrinsic viscosity.

The propylene homopolymer component A) disclosed herein can be prepared by a process comprising polymerizing propylene optionally with ethylene, in the presence of in the presence of Ziegler-Natta catalysts. An essential component of said catalysts is a solid catalyst component comprising a titanium compound having at least one titanium-halogen bond, and an electron-donor compound, both supported on a magnesium halide in active form. Another essential component (co-catalyst) is an organoaluminium compound, such as an aluminium alkyl compound. An external donor is optionally added.

The catalysts generally used in the process of the invention are capable of producing polypropylene with a value of xylene insolubility at ambient temperature greater than 90%, preferably greater than 95%.

Catalysts having the above mentioned characteristics are well known in the patent literature; particularly advantageous are the catalysts described in US patent 4,399,054 and European patent 45977. Other examples can be found in US patent 4,472,524.

The solid catalyst components used in said catalysts comprise, as electron-donors (internal donors), compounds selected from the group consisting of ethers, ketones, lactones, compounds containing N, P and/or S atoms, and esters of mono- and dicarboxylic acids.

Particularly suitable electron-donor compounds are esters of phtalic acid and 1,3-diethers of formula:

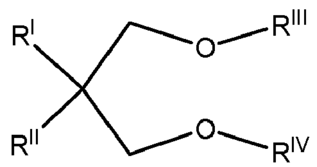

wherein $R^I$ and $R^{II}$ are the same or different and are Ci-Cis alkyl, $C_3$-$C_{18}$ cycloalkyl or $C_7$-$C_{18}$ aryl radicals; $R^{III}$ and $R^{IV}$ are the same or different and are $C_1$-$C_4$ alkyl radicals; or are the 1,3-diethers in which the carbon atom in position 2 belongs to a cyclic or polycyclic structure made up of 5, 6, or 7 carbon atoms, or of 5-n or 6-n' carbon atoms, and respectively n nitrogen atoms and n' heteroatoms selected from the group consisting of N, O, S and Si, where n is 1 or 2 and n' is 1, 2, or 3, said structure containing two or three unsaturations (cyclopolyenic structure), and optionally being condensed with other cyclic structures, or substituted with one or more substituents selected from the group consisting of linear or branched alkyl radicals; cycloalkyl, aryl, aralkyl, alkaryl radicals and halogens, or being condensed with other cyclic structures and substituted with one or more of the above mentioned substituents that can also be bonded to the condensed cyclic structures; one or more of the above mentioned alkyl, cycloalkyl, aryl, aralkyl, or alkaryl radicals and the condensed cyclic structures optionally containing one or more heteroatom(s) as substitutes for carbon or hydrogen atoms, or both.

Ethers of this type are described in published European patent applications 361493 and 728769.

Representative examples of said diethers are 2-methyl-2-isopropyl-1,3-dimethoxypropane, 2,2-diisobutyl-1,3-dimethoxypropane, 2-isopropyl-2-cyclopentyl-1,3-dimethoxypropane, 2-isopropyl-2-isoamyl-1,3-dimethoxypropane, 9,9-bis (methoxymethyl) fluorene.

Other suitable electron-donor compounds are phthalic acid esters, such as diisobutyl, dioctyl, diphenyl and benzylbutyl phthalate.

The preparation of the above mentioned catalyst component is carried out according to various methods.

For example, a MgCl2•nROH adduct (in particular in the form of spheroidal particles) wherein n is generally from 1 to 3 and ROH is ethanol, butanol or isobutanol, is reacted with an excess of TiCl4 containing the electron-donor compound. The reaction temperature is generally from 80 to 120° C. The solid is then isolated and reacted once more with TiCl4, in the presence or absence of the electron-donor compound, after which it is separated and washed with aliquots of a hydrocarbon until all chlorine ions have disappeared.

In the solid catalyst component the titanium compound, expressed as Ti, is generally present in an amount from 0.5 to 10% by weight. The quantity of electron-donor compound which remains fixed on the solid catalyst component generally is 5 to 20% by moles with respect to the magnesium dihalide.

The titanium compounds, which can be used for the preparation of the solid catalyst component, are the halides and the halogen alcoholates of titanium. Titanium tetrachloride is the preferred compound.

The reactions described above result in the formation of a magnesium halide in active form. Other reactions are known in the literature, which cause the formation of magnesium halide in active form starting from magnesium compounds other than halides, such as magnesium carboxylates.

The Al-alkyl compounds used as co-catalysts comprise the Al-trialkyls, such as Al-triethyl, Al-triisobutyl, Al-tri-n-butyl, and linear or cyclic Al-alkyl compounds containing two or more Al atoms bonded to each other by way of O or N atoms, or SO4 or SO3 groups.

The Al-alkyl compound is generally used in such a quantity that the Al/Ti ratio be from 1 to 1000.

The electron-donor compounds that can be used as external donors include aromatic acid esters such as alkyl benzoates, and in particular silicon compounds containing at least one Si-OR bond, where R is a hydrocarbon radical.

Examples of silicon compounds are (tert-butyl)2Si(OCH3)2, (cyclohexyl)(methyl)Si (OCH3)2, (cyclopentyl) 2Si(OCH3)2 and (phenyl)2Si(OCH3)2 and (1,1,2-trimethylpropyl)Si(OCH3)3.

1,3-diethers having the formulae described above can also be used advantageously. If the internal donor is one of these diethers, the external donors can be omitted.

The polymerization is generally carried out at temperatures of from 20 to 120°C, preferably of from 40 to 80°C. When the polymerization is carried out in gas-phase, the operating pressure is generally between 0.5 and 5 MPa, preferably between 1 and 4 MPa. In bulk polymerization, the operating pressure is generally between 1 and 8 MPa, preferably between 1.5 and 5 MPa. Hydrogen is typically used as a molecular weight regulator. The polymerization can be in gas phase or in slurry or in solution. In one or more reactors. Preferably the polymerizaiotn is carried put in two slurry reactors operating in series, by varying the hydrogen concentration in the two reactors.

Propylene homopolymer component B) of the present disclosure is obtained by using a metallocene catalyst with the processes known in the art. Component B) are also commercial grade such as Metocene MFY650 sold by Lyondellbasell.

The following examples are given in order to illustrate, but not limit the present disclosure.

## EXAMPLES

### CHARACTERIZATIONS

#### Xylene-insoluble and soluble fraction at 25°C

Xylene Solubles fraction has been measured according to ISO 16 152 - 2005; with solution volume of 250 ml, precipitation at 25°C for 20 minutes, 10 of which with the solution in agitation (magnetic stirrer), and drying at 70°.

#### Melt Flow Rate (MFR)

Measured according to ISO 1133 at 230°C with a load of 21.6 kg, or with a load of %kg unless otherwise specified.

#### Polydispersity (PI)

Some grams of molten homopolymer are submitted to a dynamic test in rate sweep with a parallel plate rheometer, at temperature of 200°C, according to the ISO 6721-10. G' (storage modulus) and G" (loss modulus) are measured as function of frequency. From the rate sweep data, PI is defined by PI=105/Gc, wherein Gc is the crossover modulus as value of modulus at G' = G".

#### Melting temperature via Differential Scanning Calorimetry (DSC)

The melting points of the polymers (Tm) were measured by differential scanning calorimetry (DSC) on a Perkin Elmer DSC-1 calorimeter, previously calibrated against indium melting points, and according to ISO 11357-1, 2009 and 11357-3, 2011, heating and cooling at 20°C/min. The weight of the samples in every DSC crucible was kept at 6.0 $\pm$ 0.5 mg.

#### $^{13}$C NMR of homopolymer and propylene/ethylene copolymers

$^{13}$C NMR spectra were acquired on a Bruker AV-600 spectrometer equipped with cryoprobe, operating at 160.91 MHz in the Fourier transform mode at 120°C.

The peak of the $S_{\beta\beta}$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes,

Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules, 1982, 15, 1150) using the following equations:

$$PPP = 100\ T_{\beta\beta}/S \qquad PPE = 100\ T_{\beta\delta}/S \qquad EPE = 100\ T_{\delta\delta}/S$$

$$PEP = 100\ S_{\beta\beta}/S \qquad PEE= 100\ S_{\beta\delta}/S \qquad EEE = 100\ (0.25\ S_{\gamma\delta}+0.5\ S_{\delta\delta})/S$$

$$S = T_{\beta\beta} + T_{\beta\delta} + T_{\delta\delta} + S_{\beta\beta} + S_{\beta\delta} + 0.25\ S_{\gamma\delta} + 0.5\ S_{\delta\delta}$$

The molar percentage of ethylene content was evaluated using the following equation:

$$E\%\ mol = 100 * [PEP+PEE+EEE]$$

The weight percentage of ethylene content was evaluated using the following equation:

$$E\%\ wt. = \frac{100 * E\%\ mol * MW_E}{E\%\ mol * MW_E + P\%\ mol * MW_P}$$

where P% mol is the molar percentage of propylene content, while $MW_E$ and $MW_P$ are the molecular weights of ethylene and propylene, respectively.

The product of reactivity ratio $r_1r_2$ was calculated according to Carman (C.J. Carman, R.A. Harrington and C.E. Wilkes, Macromolecules, 1977; 10, 536) as:

$$r_1r_2 = 1 + \left(\frac{EEE + PEE}{PEP} + 1\right) - \left(\frac{P}{E} + 1\right)\left(\frac{EEE + PEE}{PEP} + 1\right)^{0.5}$$

The tacticity of Propylene sequences was calculated as mm content from the ratio of the PPP $mmT_{\beta\beta}$ (28.90-29.65 ppm) and the whole $T_{\beta\beta}$ (29.80-28.37 ppm).

**Intrinsic viscosity**

The sample is dissolved by tetrahydronaphthalene at 135 °C and then it is poured into the capillary viscometer. The viscometer tube (Ubbelohde type) is surrounded by a cylindrical glass jacket; this setup allows temperature control with a circulating thermostated liquid. The downward passage of the meniscus is timed by a photoelectric device. The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation, provided that the flow time of the pure solvent is known at the same experimental conditions (same viscometer and same temperature). One single polymer solution is used to determine IV].

**Melt strength**

The melt strength is measured by Haul-off Melt Strength Meter produced by Geottfert Werkstoff Pruefmaschinen, Germany. This system measures the extensional properties of polymer melts by drawing a vertical melt strand at a constant pull-off speed or with a linear or exponentially accelerating velocity. The HAUL-OFF system measures the force needed to elongate the strand, and calculates elongation stress, draw ratio and apparent elongation rate and viscosity. Polymer is melt and plasticized through a capillary rheometer, then is extruded from a hole die with a 1 mm of diameter, 30

mm of length and 180° inlet angle. The test is performed at 250°C. The distance from the capillary outlet to the center of the transducer pulley is 150 mm.

The monofilament is stretched at each temperature test applying an acceleration equal to 6 mm/s2 and, passing through an angular transducer, its tension is measured. The draw ratio (dimensionless value) and force (cN) values are recorded as the final result in addition to the entire curve. The value of the melt strength is the maximum force value of the curve.

**Molecular weights determination by GPC**

GPC was used to measure the molecular weight and molecular weight distribution

(MWD) of the liquid product in 1,2,4-trichlorobenzene (TCB) using GPC-IR (Polymer Char, Valencia, Spain), a high temperature GPC dedicated to Polyolefin analysis. The GPC-IR was equipped with a column set of four PLgel Olexis mixed-bed (Polymer Laboratories, Church Stretto, UK) and an IR5 infrared detector (Polymer Char). The dimensions of the columns were 300 x 7.5 mm, and their particle size 13 mm. The mobile phase flow rate was kept at 1.0 mL/min. The measurements were carried out at 150°C. Solution concentrations were 2.0 mg/mL (at 150°C) and 0.3 g/L of 2,6-diterbuthyl-p-chresole were added to prevent degradation. Vials were also solubilized in N2 atmosphere.

For GPC calculation, a universal calibration curve was obtained using 12 polystyrene (PS) standards supplied by Polymer Char (peak molecular weights ranging from 266 to 1220000). A third order polynomial fit was used for interpolating the data and obtaining the relevant calibration curve. Data acquisition and processing was done by using Empower 3 (Waters, Milford MA).

The Mark-Houwink relationship (intrinsic viscosity = K*(molecular weight)a) was used to determine the molecular weight distribution and the relevant average molecular weights: the K values were KPS = 1.21 × 10-4 dL/g, and KPP = 1.90 x 10-4 dL/g for PS (calibration) and PP respectively, while the Mark-Houwink exponents a = 0.706 for PS and a = 0.725 for PP were used.

**Charpy impact test**

Charpy impact test is measured according to ISO 179-1eA, e ISO 1873-2, on compression sample

**Tensile Modulus**

Tensile Modulus is measured according to ISO 527-2, and ISO 1873-2 on compression sample

**Examples 1 - Preparation of homopolymer A)**

**Procedure for the preparation of the solid catalyst component**

The solid catalyst used in the following examples was prepared according to the Example 10 of the International Patent Application WO 00/63261. Triethylaluminium (TEAL) was used as co-catalyst and dicyclopentyldimethoxysilane as external donor, with the weight ratios indicated in Table 1.

**Polymerization**

The polymerization run is carried out in continuous mode in a series of two reactors equipped with devices to transfer the product from one reactor to the one immediately next to it. The two reactors are liquid phase loop reactors. Propylene is the solvent, hydrogen is used as molecular weight regulator.

The gas phase (propylene, ethylene and hydrogen) is continuously analyzed via gas-chromatography.

At the end of the run the powder is discharged and dried under a nitrogen flow.

The main polymerization conditions and the properties of the polymer are reported in Tables 1 and 2.

Table 1 - Polymerization conditions

| | A1 |
|---|---|
| TEAL/catalys (wt ratio) | 5.4 |
| TEAL/ext donor (wt ratio) | 3 |
| first loop | |
| Temperature °C | 65 |

(continued)

| | A1 |
|---|---|
| Pressure barg | 40 |
| $H_2$ ppmol | <10 ppmol |
| split wt% | 50 |
| secondo loop | |
| Temperature °C | 75 |
| Pressure barg | 40 |
| $H_2$ ppmol | 450 ppmol |
| split wt% | 50 |
| | |

The features of the polymer of example A, are reported on table 2

Table 2

| Example | | A1 |
|---|---|---|
| component A1) | wt% | 50 |
| IV | dl/g | 9.3 |
| component A2) | wt% | 50 |
| IV | dl/g | 3.7 |
| whole composition | | |
| MFR 21.6 kg | g/10 min | 3.39 |
| IV | dl/g | 6.5 |
| XS | wt% | 2.7 |
| mmmm | mol% | 92.4 |
| Polydispersity , PI | | 6.6 |
| tensile modulus | MPa | 1480 |
| charpy impact test at 23°C | $kJ/m^2$ | 5.7 |
| melt strength | N | 0.088 |
| Tm 1 | °C | 164 |
| Tm 2 | °C | 148 |

**Examples 1, 2 and comparative example 3**

Propylene homopolymer component A of example 1 have been blended with Metocene MF650Y a commercial propylene homopolymer sold by Lyondellbasell. and, for comparative example 3 with a propylene homopolymer obtained by ZN catalyst having an MFR (2.16 kg) of 100 g/10 min The features of MF650Y and of MFR100 homopolymer have been reported in table 3. The blends are reported on table 5

Table 4

| | | MF650Y | 100MFR homopolymer |
|---|---|---|---|
| MFR 2.16 kg | g/10min | 1800 | 100 |
| Mw/Mn | | <3.6 | >4 |
| Tm | °C | 160 | - |

Table 5

| | | blend 1 | blend 2 | Comp blend 3 |
|---|---|---|---|---|
| A 1 | | 80 | 70 | 58 |
| MF650Y | | 20 | 30 | |
| Homo MFR100 | | | | 42 |

The features of the blends are reported on table 6

Table 6

| | | blend 1 | blend 2 | Comp blend 3 |
|---|---|---|---|---|
| Tm1 | °C | 163 | 162 | Nm |
| Tm2 | °C | 148 | 147 | Nm |
| MFR 230°C, 5 kg | g/10 min | 0.67 | 1.04 | 2.7 |
| IV | dl/g | 4.28 | 4.29 | 3.72 |
| gel number >=0.2M | 1 $m^2$ | 30 | 363 | 6910 |
| GPC | | two peaks | two peaks | Nm |
| first peak/second peak | log Mw | 4.72/5.90 | 4.21/6.04 | Nm |
| Mw/Mn | | 28.2 | 34.3 | Nm |
| Mz/Mw | | 3.6 | 4.2 | Nm |
| tensile modulus | MPa | 1800 | 1800 | 1870 |
| Nm=not measured | | | | |

The gels number of the polypropylene composition according to the invention is considerably lower with respect to the comparative examples even if the modulus is substantially the same.

The gels count test has been carried out on a cast film Collin Extrusion line diameter with a 25 mm single screw with the following features:

Single screw LID 25
Temperature profile
Cylinders 200 (close to the hopper) -> 230°C (at the end of the extruder, before the inlet to the die)
Die 240°C
Die width 150 mm
Chill roll 30°C
Film speed 3.0 m/min
Film thickness 50 micron
Inspected area 1 m2
OCS FS5 gel count unit on a 4 cm wide stripe

## Claims

**1.** A polypropylene composition comprising:

A) from 50 wt% to 90 wt% of a propylene homopolymer optionally containing up to 1.0 wt% of ethylene derived units **characterized in that**:

- two melting points are present in the DSC thermogram, measured according to ISO 11357-3, 20°C/min;
- the higher melting point, Tm1, measured according to ISO 11357-3, 20°C/min, ranges from 155°C to 170°C;
- the fraction soluble in xylene at 25°C is comprised between 6.0 wt% and 2.0wt%;
- the isotactic pentads mmmm % measured with $C^{13}$NMR ranges from 96.5 mol% to 89.0 mol%;

- the intrinsic viscosity (IV) measured in tetrahydronaphthalene at 135 °C ranges from 5.0 to 12.0 dl/g;
- the melt strength measured at 250°C and applying an acceleration equal to 6 $mm/s^2$ is higher than 0.070 N;

B) from 10 wt% to 50 wt% of a propylene homopolymer obtained by using metallocene catalyst optionally containing up to 1.0 wt% of ethylene derived units **characterized in that**:

- molecular weight distribution, measured by GPC, Mw/Mn lower than 5;
- MFR, measured according to ISO 1133 at 230°C with a load of 2.16 kg, ranging from 1000 g/10 min to 2500 g/10 min;

melting point, measured by DSC according to ISO 11357-3, 20°C/min ranging from 153°C to 165°C; wherein the resulting composition is **characterized in that**:

two melting points in the DSC thermogram, measured according to ISO 11357-3, 20°C/min are present;
the higher melting point, Tm1, measured according to ISO 11357-3, 20°C/min, ranges from 155°C to 170°C; the lower melting point, Tm2, ranges from 140°C to 154°C;
MFR, measured according to ISO 1133 at 230°C with a load of 5 kg, ranging from 0.2 g/10 min to 3.0 g/10 min;

- the intrinsic viscosity (IV) measured in tetrahydronaphthalene at 135 °C ranges from 3.0 to 5.5 dl/g.

**2.** The polypropylene composition according to claim 1 wherein the homopolymer of component A) shows a polydispersity index, PI, comprised between 4.5 and 7.5.

**3.** The polypropylene composition according to claims 1 or 2 wherein two peaks are present in the GPC analysis, measured as described in the examples section; the first having a log Mw ranging from 4.10 to 5.00; the second peak having the log Mw ranging from 5.50 to 6.3.

**4.** The polypropylene composition according to anyone of claims 1-3 having the distribution of molecular weight Mw/Mn ranging from 20.0 to 50.0.

**5.** The polypropylene composition according to anyone of claims 1-4 having the distribution of molecular weight Mz/Mw ranging from 2.8 to 6.0.

**6.** The polypropylene composition according to anyone of claims 1-5 wherein the propylene homopolymer component A) comprises:

i) from 30 wt% to 70 wt% ; of a first propylene homopolymer optionally containing up to 1.0 wt% of ethylene derived units having:

- the intrinsic viscosity (IV) measured in tetrahydronaphthalene at 135 °C ranging from 8.0dl/g to 13.0 dl/g;

ii) From 30 wt% to 70 wt% of a second propylene homopolymer optionally containing up to 1.0 wt% of ethylene derived units having:

- the intrinsic viscosity (IV) measured in tetrahydronaphthalene at 135 °C ranging from 2.0 to 5.5 dl/g;

the sum of the amounts of i) + ii) being 100 wt%;

**7.** The polypropylene composition according to anyone of claims 1-6 wherein in component A) the isotactic pentads mmmm % measured with $C^{13}$NMR ranges from 96.0 mol% to 90.5 mol%.

**8.** The polypropylene composition according to anyone of claims 1-7 wherein the higher melting point, Tm1, measured according to ISO 11357-3, 20°C/min, ranges from 158°C to 168°C.

**9.** The polypropylene composition according to anyone of claims 1-8 wherein the lower melting point, Tm2, measured according to ISO 11357-3, 20°C/min, ranges from 142°C to 152°C.

10. The polypropylene composition according to anyone of claims 1-9 wherein MFR, measured according to ISO 1133 at 230°C with a load of 5 kg, ranges from 0.3 g/10 min to 2.0 g/10 min.

11. The polypropylene composition according to anyone of claims 1-10 wherein- the intrinsic viscosity (IV) measured in tetrahydronaphthalene at 135 °C ranges from 3.5 to 5.3 dl/g.

12. The polypropylene composition according to anyone of claims 1-11 wherein in component B) the MFR, measured according to ISO 1133 at 230°C with a load of 2.16 kg, ranges from 1300 g/10 min to 2200 g/10 min.

13. The polypropylene composition according to anyone of claims 1-12 wherein in component B) the melting point, measured by DSC according to ISO 11357-3, 20°C/min ranges from 155°C to 163°C.

14. The polypropylene composition according to anyone of claims 1-13 wherein in component A) the fraction soluble in xylene at 25°C is comprised between 5.0 wt% and 2.5wt%.

15. Film comprising the polypropylene composition of claims 1-14

Europäisches Patentamt
European Patent Office
Office européen des brevets

# EUROPEAN SEARCH REPORT

Application Number
EP 24 19 0575

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2024/099626 A1 (BASELL POLIOLEFINE ITALIA SRL [IT]) 16 May 2024 (2024-05-16)<br>* paragraphs [0002], [0011], [0032] *<br>* example 1 *<br>* claims 1-15 *<br>----- | 1-15 | INV.<br>C08F110/06<br>C08F4/651<br>C08F4/64<br>C08L23/12 |
| A | WO 2024/099628 A1 (BASELL POLIOLEFINE ITALIA SRL [IT]) 16 May 2024 (2024-05-16)<br>* paragraphs [0002], [0014], [0035] *<br>* example 1 *<br>* claims 1-15 *<br>----- | 1-15 | |

TECHNICAL FIELDS SEARCHED (IPC)

C08F
C08L

The present search report has been drawn up for all claims

1

| Place of search | Date of completion of the search | Examiner |
|---|---|---|
| Munich | 8 January 2025 | Neumeier, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 19 0575

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2025

| Patent document cited in search report | Publication date | Patent family member(s) | Publication date |
|---|---|---|---|
| WO 2024099626 A1 | 16-05-2024 | NONE | |
| WO 2024099628 A1 | 16-05-2024 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4399054 A
- EP 45977 A
- US 4472524 A
- EP 361493 A
- EP 728769 A
- WO 0063261 A

### Non-patent literature cited in the description

- **C. J. CARMAN** ; **R. A. HARRINGTON** ; **C. E. WILKES**. Monomer Sequence Distribution in Ethylene-Propylene Rubber Measured by 13C NMR. 3. Use of Reaction Probability Mode. *Macromolecules*, 1977, vol. 10, 536
- **M. KAKUGO** ; **Y. NAITO** ; **K. MIZUNUMA** ; **T. MIYATAKE**. Carbon-13 NMR determination of monomer sequence distribution in ethylene-propylene copolymers prepared with δ-titanium trichloride-diethylaluminum chloride. *Macromolecules*, 1982, vol. 15, 1150
- **C.J. CARMAN** ; **R.A. HARRINGTON** ; **C.E. WILKES**. *Macromolecules*, 1977, vol. 10, 536